# EUROPÄISCHE PATENTANMELDUNG

(11) **EP 0 967 822 A1**
(43) Veröffentlichungstag der Anmeldung: **29.12.1999**
(21) Anmeldenummer: 99110039.7
(22) Anmeldetag: 21.05.1999
(51) Int. Cl.: H04Q 11/04

(54) **Kommunikationssystem**

(30) Priorität: 23.06.1998 CH 133798
(71) Anmelder: Siemens Schweiz AG (Siemens Suisse SA) (Siemens Svizzera SA) Siemens Switzerland Ltd), 8047 Zürich (CH)
(72) Erfinder: Kaufmann, Robert, 8048 Zürich (CH); Kremer, Teodor, 8052 Zürich (CH); Lietha, Peter, 5525 Fischbach (CH); Mettler, Daniel, 8048 Zürich (CH); Rippstein, Eugen, 8904 Aesch (CH); Truog, Thomas, 8824 Schönenberg (CH)

(57) **Zusammenfassung**

Das Kommunikationssystem weist mindestens eine Vermittlungseinheit (VT1, ..., VT4) auf, die eine der Durchschaltung von Verbindungsleitungen dienende zentrale Durchschalteeinheit mit einem Koppelfeld und einer zentralen Steuerung enthält. Ferner sind einerseits mit der Durchschalteeinheit und andererseits mit Endgeräten verbundene Servermodule (SLMY1, ..., SLMY4) vorhanden, die für die Bereitstellung von besonderen Leistungsmerkmalen für die Benutzer der Endgeräte miteinander verbunden sind. Dabei sind die Servermodule (SLMY1, ... SLMY4) an ein Paketvermittlungs-Netz (PSN) angeschlossen, über das die Servermodule (SLMY1, ..., SLMY4) die für die Inanspruchnahme der besonderen Leistungsmerkmale erforderlichen Informationen und Signale austauschen. Das Kommunikationssystem ist flexibel und lässt sich in einfacher Weise an neue Anforderungen, insbesondere bezüglich Anzahl angeschlossener Endgeräte, Standort der Endgeräte sowie Betriebssicherheit des Systems anpassen.

## Beschreibung

Die vorliegende Erfindung betrifft ein Kommunikationssystem nach dem Oberbegriff des Patentanspruchs 1.

Aus [1] ist ein Kommunikationssystem mit einer Vermittlungseinheit bekannt, an die einerseits über digitale und analoge Schnittstellenmodule herkömmliche Endgeräte und andererseits über Konzentratorbaugruppen sowie über Peripheriemodule bzw. vermittlungstechnische Server eine Vielzahl von Sonderendgeräten angeschlossen sind. Die Vermittlungseinheit ist über eine Schnittstellenbaugruppe mit anderen privaten (Nebenstellenanlagen) oder öffentlichen Kommunikationssystemen verbunden. Mehrere vermittlungstechnische Server sind in Systemgruppen zusammengefasst. Dabei sind die Server einer Systemgruppe miteinander verbunden, um den einer Systemgruppe angehörenden Sonderendgeräten erforderliche Sonderfunktionen zur Verfügung zu stellen. Daraus ergibt sich eine relativ starre Konfiguration für das Kommunikationssystem, was z.B. beim Einsatz als Händlersystem in Banken nachteilig ist. Händlersysteme müssen flexibel konfigurierbar sein, da die Zusammensetzung der Händlergruppen relativ häufig ändert. Deshalb ist es erforderlich, Änderungen der Anzahl angeschlossener Sonderendgeräte wie auch Änderungen des Standortes von Sonderendgeräten einer Systemgruppe einfach und rasch vornehmen zu können, ohne dabei die Homogenität des Systems zu beeinträchtigen.

Der vorliegenden Erfindung liegt daher die Aufgabe zugrunde, ein Kommunikationssystem der eingangs genannten Art zu schaffen, das flexibel ist und einfach an neue Anforderungen angepasst werden kann.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Vorteile der Erfindung sind:
- einfache Anpassung des Kommunikationssystems bei Änderungen in den Systemgruppen
- einfache Möglichkeit zur Verteilung der Händler von Systemgruppen auf mehrere Standorte
- Erhöhung der Betriebssicherheit durch einfache Verteilung der Systemgruppen auf mehrere Vermittlungseinheiten
- Anpassungen haben praktisch keinen Einfluss auf zentrale Systemteile.

Die Erfindung wird nachfolgend anhand einer Zeichnung beispielsweise näher erläutert. Es zeigt:
- Fig. 1: ein bekanntes Kommunikationssystem der eingangs genannten Art
- Fig. 2: eine bekannte Vernetzung innerhalb einer Systemgruppe
- Fig. 3: das Prinzip der Erfindung
- Fig. 4: ein erstes gemäss der Erfindung aufgebautes Kommunikationssystem
- Fig. 5: Einzelheiten der erfindungsgemässen Vernetzung in einer Systemgruppe
- Fig. 6: ein zweites gemäss der Erfindung aufgebautes Kommunikationssystem
- Fig. 7: ein drittes gemäss der Erfindung aufgebautes Kommunikationssystem

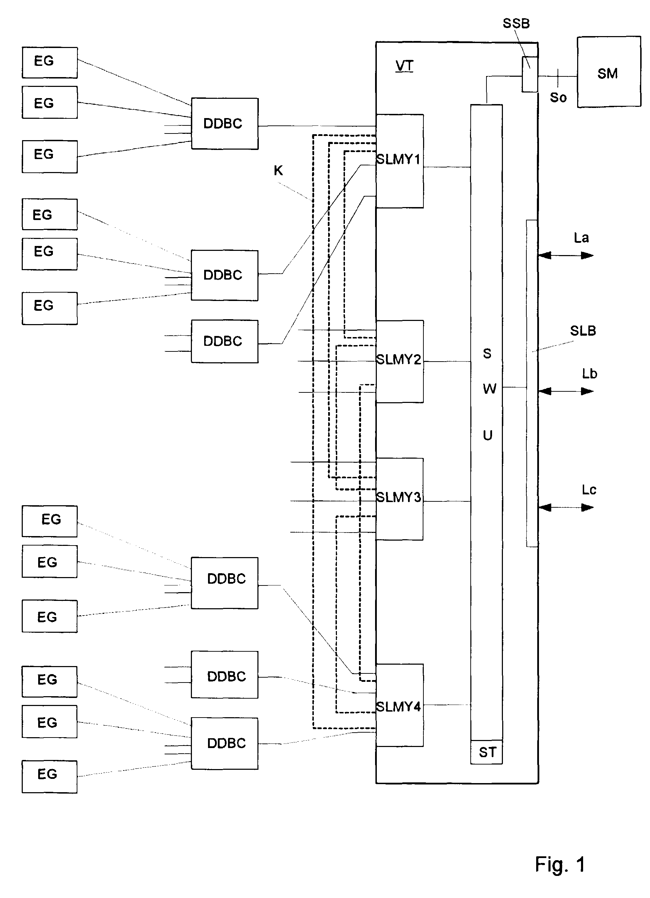

Fig. 1 zeigt ein digitales Kommunikationssystem, das nach dem aus [1] bekannten Prinzip mit zentralen und dezentralen Funktionseinheiten aufgebaut ist. Das Kommunikationssystem besteht im wesentlichen aus einer Vermittlungseinheit VT und einer Vielzahl an die Vermittlungseinheit VT angeschlossener Sonder-Endgeräte EG. Sonder-Endgeräte EG sind Kommunikationsgeräte mit speziellen Leistungsmerkmalen, wie sie z.B. in einer Händleranlage für den Devisenhandel benötigt werden. Nebst Sonder-Endgeräten EG - nachfolgend einfach "Endgeräte EG" genannt - können in diesem Kommunikationssystem wie aus [1] bekannt noch herkömmliche analoge oder digitale Kommunikationsgeräte angeschlossen werden.

Die in Fig.1 dargestellte Anzahl von Servermodulen SLMY, Konzentratorbaugruppen DDBC und Endgeräten EG wie auch die nachfolgend angegebenen Spezifikationen sind als ein zur einfacheren Erläuterung dienendes Beispiel zu betrachten. Selbstverständlich ist auch ein anderes nach diesem Prinzip realisiertes Kommunikationssystem mit anderen Spezifikationen denkbar.

Die Vermittlungseinheit VT besteht aus einer zentralen Durchschalteeinheit SWU, an die mehrere Servermodule, z.B. Servermodule SLMY1 ... SLMY4 angeschlossen sind, die als vermittlungstechnische Server arbeiten. Jedes Servermodul SLMY ist einerseits über eine PCM-Leitung (z.B. 8 Mbit/s) mit der Durchschalteeinheit SWU und andererseits je über eine PCM-Leitung (z.B. 8 Mbit/s) mit drei Konzentratorbaugruppen DDBC verbunden. Die Servermodule SLMY weisen einen Koppler zur Durchschaltung der von der Durchschalteeinheit SWU kommenden Sprach-, Daten- und Signalisierkanäle (Time slots) zu den Konzentratorbaugruppen DDBC sowie Konferenzeinrichtungen auf. An jede Konzentratorbaugruppe DDBC ist eine bestimmte Anzahl Endgeräte EG über je eine PCM-Leitung (z.B. 2 Mbit/s) angeschlossen. Die Konzentratorbaugruppen DDBC sind mit Multiplexfunktionen ausgestattet. Sie verfügen über einen Koppler, der die Sprach- und Signalisierkanäle der von den Servermodulen SLMY kommenden PCM-Leitung zu den entsprechenden Endgeräten EG durchschaltet. Die Konzentratorbaugruppen DDBC werden vom zugeordneten Servermodul SLMY gesteuert. An der Vermittlungseinheit VT ist über einen Schnittstellenbaustein SSB und über eine So-Schnittstelle ein System-Manager SM angeschlossen, über den der Betreiber das Kommunikationssystem konfigurieren kann. Zu diesem Zweck weist der System-Manager SM eine grosse Datenbank auf, die unter anderem die Daten und Programme für die Konfiguration der Servermodule SLMY, der Konzentratorbaugruppen DDBC und der Endgeräte EG enthält. Als System-Manager SM kann ein Rechner mit der notwendigen Speicherkapazität und mit einem Bildschirm vorgesehen werden.

Die Durchschalteeinheit SWU ist ein digitaler Koppler mit einer der Durchschaltung von Verbindungen dienenden Steuerung ST. Diese Konfiguration ermöglicht, beliebige Endgeräte EG über die Servermodule SLMY und die Durchschalteeinheit SWU miteinander zu verbinden, um über diese Verbindungen Sprachinformationen wie auch Daten und Programmcode auszutauschen. Ein Austausch von Daten zwischen Endgeräten EG findet beispielsweise statt, wenn in den Endgeräten EG der jeweilige Betriebszustand anderer Endgeräte EG, wie der Besetztzustand, angezeigt werden soll. Ferner sind über eine Schnittstellenbaugruppe SLB an der Durchschalteeinheit SWU externe Leitungen, z.B. zu anderen privaten Kommunikationsanlagen oder zum öffentlichen Fernmeldenetz führende analoge oder digitale Leitungen (Amtsleitungen La, Mietleitungen Lb und Standleitungen Ls) angeschlossen. So können Endgeräte EG über die Vermittlungseinheit VT auch mit externen, d.h. nicht am gezeigten Kommunikationssystem angeschlossenen Partnern in Verbindung treten.

Die Endgeräte EG stellen dem Benützer je nach Anwendungsfall eine Vielzahl komfortabler Leistungsmerkmale zur Verfügung. In einer für den Devisenhandel in Banken eingesetzten Ausführungsform (Händleranlage) des Kommunikationssystems weisen die Endgeräte EG für verschiedene Funktionen (wie z.B. Zielwahl) eine Tastatur auf einem Berührungs-Bildschirm (Touch Screen) auf. Ferner sind in den Endgeräten EG Freisprech- und Mithörfunktionen (Sprachüberwachung) oder Funktionen zum Eintreten in bestehende Verbindungen vorgesehen. Um diesen Funktionen gerecht zu werden, verfügt jedes Endgerät EG über einen eigenen Prozessor, der mittels in einem zugehörigen Programm- bzw. Datenspeicher abgespeicherter Software diese Funktionen steuert. Bei der Software handelt es sich um Vermittlungssoftware und um Bedienersoftware. Die Vermittlungssoftware steuert alle im Zusammenhang mit der Kommunikation stehenden Funktionen, wie die Überwachung und Durchschaltung von Verbindungen (Sprachkanäle) zu den Konzentratorbaugruppen DDBC und zu den Servermodulen SLMY. Die Bedienersoftware übernimmt im wesentlichen die Steuerung der Bedienoberfläche.

Das in Fig. 1 gezeigte bekannte Kommunikationssystem umfasst eine erste Ausbaustufe für kleinere Benutzerteams mit einer einzigen Systemgruppe mit vier Servermodulen SLMY1,..., SLMY4. Eine Systemgruppe einer Händleranlage umfasst in der Regel eine Gruppe von Händlern, die bestimmte gleichartige Handelsgeschäfte - z.B. Devisenhandel oder Wertschriftenhandel - abwickeln, wobei die für diese Handelsgeschäfte typisch erforderlichen Leistungsmerkmale in der Systemgruppe implementiert sind.
Typische Leistungsmerkmale in einer Händleranlage sind z.B. "Sprachüberwachung" (Speech Monitoring) und "Eintreten auf bestimmte Leitungen", d.h. das Zugreifen auf bestimmte von/zu der Durchschalteeinheit SWU kommende/gehende Sprachkanäle. Zur Realisierung dieser Leistungsmerkmale können die Servermodule SLMY einer Systemgruppe miteinander vernetzt werden. Dabei können die von der Durchschalteeinheit SWU zu einem Servermodul SLMY führenden Sprachkanäle zu den anderen Servermodulen SLMY der Systemgruppe "durchgezogen" werden. Hierzu kann wie in Fig. 1 gezeigt, jedes Servermodul SLMY über je ein Kabel K mit jedem anderen Servermodul SLMY verbunden werden. Damit kann von jedem Endgerät EG aus durch Betätigen einer entsprechenden Taste die Funktion "Sprachüberwachung" und/oder die Funktion "Eintreten auf bestimmte Leitungen" aktiviert werden. Die "Sprachüberwachung" erlaubt einem Benutzer. von anderen Benutzern der Systemgruppe geführte Gespräche mitzuhören. Durch Betätigen einer entsprechenden Taste kann er das mitzuhörende Gespräch einem seinem Endgerät EG zugeordneten Mithör-Lautsprecher zuführen. Die Funktion "Eintreten auf eine bestimmte Leitung" ermöglicht einem Benutzer, nicht nur Gespräche mitzuhören, sondern sich in ein bestimmtes Gespräch einzuschalten und sich aktiv daran zu beteiligen. Die Realisierung dieses Leistungsmerkmals erfolgt nach dem Prinzip der Konferenzschaltung, das bekannt ist und auf das hier nicht weiter eingegangen wird. Wie in [1] angegeben, können in weiteren Ausbaustufen weitere Systemgruppen hinzugefügt werden, die in gleicher Weise miteinander vernetzt werden.

Die Kabel K für die Vernetzung der Servermodule SLMY1, ..., SLMY4 müssen die zur Übertragung der über die durchgezogenen Leitungen notwendigen Daten erforderliche Übertragungskapazität zur Verfügung stellen. Im vorliegenden Beispiel habe jedes Servermodul SLMY Zugriff zu 120 (entsprechend 4 x 2 Mbit/s-Leitung) von der Durchschalteeinheit SWU kommenden bzw. zu der Durchschalteeinheit SWU führenden bidirektionalen Sprachkanälen. Ferner seien jedem der vier Servermodule SLMY1, ..., SLMY4 30 Endgeräte EG, d.h. 10 Endgeräte EG pro Konzentratorbaugruppe DDBC zugeordnet und jedes Endgerät EG weise vier Handapparate auf. Der Benutzer kann so mit bis zu vier verschiedenen beliebig wählbaren Partnern "gleichzeitig" sprechen, was eine typische Anforderung für Händleranlagen ist. Ferner ist jedes Endgerät EG mit vier Lautsprechern ausgerüstet, wovon jeder ein gleichzeitiges Mithören von mehreren (z.B. bis zu 4) Gesprächen ermöglicht.

Für eine vollständige Vernetzung der 4 Servermodule SLMY1, ..., SLMY4 sind mindestens sechs Verbindungen notwendig, d.h. von jedem Servermodul SLMY führen mindestens drei Kabel K weg, nämlich je eines zu den anderen Servermodulen SLMY. Zur Sprachüberwachung wird für jeden der 120 bidirektionalen Sprachkanäle eines Servermoduls SLMY die 2er-Summe aus Hin- und Rückkanal gebildet und zu jedem der anderen Servermodule SLMY geführt. Jedes Servermodul SLMY hat somit Zugang zu den 120 eigenen Sprachkanälen und zu 360 Sprachkanälen der anderen Servermodule SLMY2, ..., SLMY4, nämlich je 120 Sprachkanäle von jedem anderen Servermodul SLMY der Systemgruppe. Dies ermöglicht, dass in jedem Endgerät EG der Systemgruppe alle sich momentan im Gespräch befindlichen Verbindungen (Sprachkanäle) angezeigt und bestimmte Verbindungen ausgewählt und mitgehört werden können. Ferner werden die von der Durchschalteeinheit SWU kommenden bidirektionalen Sprachkanäle jedes Servermoduls SLMY zu den anderen Servermodulen SLMY der Systemgruppe "durchgezogen" und der Benutzer eines Endgerätes EG kann so in eine beliebig wählbare aktive Sprachverbindung eintreten und am Gespräch teilnehmen. Die Signalisierung zur Anzeige der Sprachkanäle erfolgt über einen separaten Signalisierkanal.

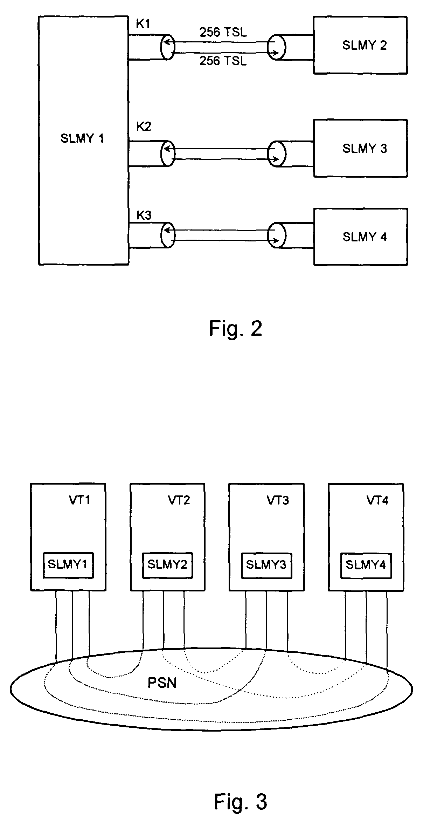

Die zur Vernetzung der Servermodule SLMY1, ..., SLMY4 in einer Systemgruppe notwendige Übertragungskapazität ist in Fig. 2 verdeutlicht. Das Servermodul SLMY1 ist je über ein Kabel K mit den anderen Servermodulen SLMY2, ..., SLMY4 verbunden. Jedes Kabel K umfasst eine bidirektionale PCM-Vielfachleitung (Highway), die in jeder Richtung 256 Kanäle (Time slots TSL) zur Verfügung stellt. Die in Fig. 2 nicht gezeigte Verbindung der Servermodule SLMY2, ..., SLMY4 untereinander erfolgt in gleicher Weise über drei weitere Kabel K.

Diese Art der Vernetzung der Servermodule SLMY in einer Systemgruppe ist relativ starr. Sie eignet sich vor allem dann, wenn alle Servermodule SLMY ein und derselben Vermittlungseinheit VT zugeordnet sind. Dabei kann jedoch ein Ausfall der Vermittlungseinheit VT zu einem Totalausfall des Kommunikationssystems führen. Je mehr Endgeräte EG die Systemgruppe umfasst, desto grösser ist die Tragweite eines Totalausfalls. Die Auswirkungen eines Ausfalls werden reduziert, wenn die Servermodule SLMY auf mehrere Vermittlungseinheiten VT verteilt werden. Wenn sich zudem Endgeräte EG einer Systemgruppe an verschiedenen voneinander entfernten Standorten befinden, müssen entsprechende Servermodule SLMY verschiedenen Vermittlungseinheiten VT an verschiedenen Standorten zugeordnet werden. Dabei darf die Homogenität des Systems nicht beeinträchtigt werden, d.h. das Kommunikationssystem muss sich für die Benutzer aller Endgeräte EG einer Systemgruppe wie ein auf eine einzige Vermittlungseinheit VT und einen einzigen Standort konzentriertes System verhalten. Insbesondere muss jeder Benutzer einer Systemgruppe auf alle Ressourcen (insbesondere Verbindungen bzw. Sprachkanäle in seiner Systemgruppe) zugreifen können, und zwar unabhängig davon, welches Endgerät EG der Systemgruppe er gerade benützt. In einem Kommunikationssystem, bei dem die Servermodule SLMY auf mehrere Vermittlungseinheiten VT an einem oder an mehreren Standorten verteilt sind, würde die oben beschriebene Vernetzung der einer Systemgruppe angehörenden Servermodule SLMY mit Kabeln K unter Umständen zu einer so grossen Anzahl von Kabeln führen, die nicht mehr vertretbar ist.
Um diesen Anforderungen mit möglichst geringen Auswirkungen auf das Systemkonzept gemäss Fig.1 gerecht zu werden, wird zur Verbindung der Servermodule SLMY erfindungsgemäss ein separates Netzwerk verwendet, das nach dem Prinzip der Paketvermittlung (Packet Switching Network) arbeitet. Vorzugsweise wird ein Paketvermittlungsnetz eingesetzt, das nach der bekannten ATM- (Asynchronous Transfer Mode) Technik arbeitet. Im Vergleich zu anderen bekannten Paketvermittlungsverfahren (z.B. Ethernet) bietet ein ATM-Netz den Vorteil einer garantierten Bandbreite und eines geringeren Overheads. Ausführliche Informationen zu ATM finden sich beispielsweise in [2].

Fig.3 zeigt das Prinzip der erfindungsgemässen Ankopplung der Servermodule SLMY1, ..., SLMY4 einer Systemgruppe des Kommunikationssystems von Fig.1 an ein ATM-Paket-Vermittlungsnetz PSN. Bei der dargestellten Konfiguration sind vier Ausfalleinheiten gebildet, indem je ein Servermodul SLMY der Systemgruppe je einer Vermittlungseinheit VT1, ..., VT4 zugeordnet ist. Die Vermittlungseinheiten VT können sich an ein und demselben Standort oder an mehreren voneinander entfernten Standorten befinden.

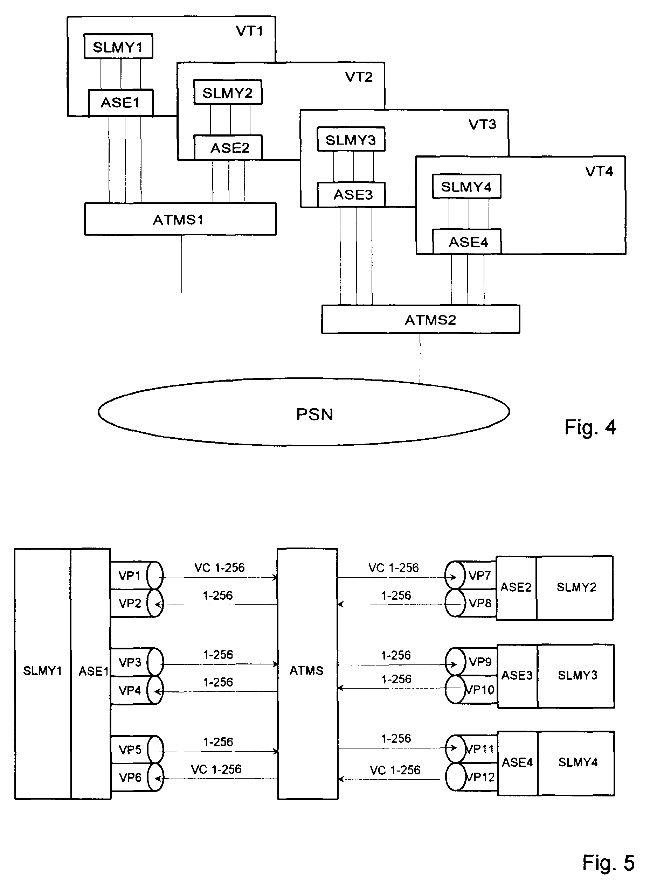

Fig. 4 zeigt Einzelheiten zur Ankopplung der Servermodule SLMY an das Paketvermittlungsnetz PSN über je eine Anschalteeinheit ASE1, ..., ASE4, von denen je zwei mit einem ATM-Vermittler ATMS1 bzw. ATMS2 verbunden sind. Diese Konfiguration ist nicht zwingend, sie lässt vielmehr in einfacher Weise verschiedene Alternativen zu, um die jeweils angestrebte Betriebssicherheit (Sicherheit gegen Systemausfall) zu erreichen. So können statt zwei auch vier Vermittler ATMS vorgesehen werden, nämlich je einer pro Servermodul SLMY. Ebenso ist denkbar, einer Vermittlungseinheit VT mehrere Servermodule SLMY mit zugehöriger Anschalteeinheit ASE zuzuordnen. Weiter ist denkbar, eine oder mehrere Vermittlungseinheiten VT an verschiedenen Standorten vorzusehen. Als Vermittler ATMS kann beispielsweise der handelsübliche Switch LS1010 der Firma Cisco eingesetzt werden.

Jede Richtung der PCM-Vielfachleitungen von Fig. 2 zwischen einer Anschalteeinheit ASE und einem Vermittler ATMS (Fig.4) stellt im Sinne des ATM-Prinzips einen virtuellen Pfad VP dar, der in den Anschalteeinheiten ASE durch einen Virtual Path Identifier addressiert wird. Jede über einen virtuellen Pfad verlaufende Sprachverbindung stellt einen virtuellen Kanal VC dar, der ebenfalls in den Anschalteienheiten ASE durch einen Virtual Channel Identifier adressiert wird. Die Anschalteeinheit ASE arbeitet als Konverter, der das Format der vom zugehörigen Servermodul SLMY gelieferten Daten in das auf dem Paketvermittlungsnetz PSN verwendete Datenformat, im vorliegenden Fall in das Zellenformat von ATM, umsetzt. Dabei wird jeder vom Servermodul SLMY kommende Kanal nach einer festen Regel - entsprechend ATM Adaption Layer 1 (AAL1) - in das Format von ATM umgesetzt. Im Vermittler ATMS werden die Verbindungen zwischen den einzelnen Ports der Anschalteeinheit ASE als feste Pfade (Permanent Virtual Connection PVC) im Sinne von ATM eingerichtet.

Fig. 5 zeigt das Prinzip für die Umsetzung der in Fig.2 dargestellten Vernetzung der Servermodule SLMY1, ..., SLMY4 einer Systemgruppe in die ATM-Technik, wobei die Verbindungen zwischen den Servermodulen SLMY2 bis SLMY4 weggelassen sind. Jede der sechs Verbindungen zwischen den vier Servermodulen SLMY1 bis SLMY4 weist zwei virtuelle Pfade - je ein Pfad VP1 bzw. VP2 in einer Richtung - mit je 256 virtuellen Kanälen VC auf. Die virtuellen Kanäle werden vom Vermittler ATMS durchgeschaltet, wobei im Vermittler ATMS die Verknüpfungen der Pfade zwischen den Anschalteeinheiten ASE fest eingestellt sind, wodurch die erforderlichen Anpassungen der Steuerungsfunktionen des Kommunikationssystems gering bleiben. Hingegen ist die Zuordnung der virtuellen Kanäle VC durch die Anschalteeinheiten ASE frei wählbar. Für jeden virtuellen Pfad VP zwischen den Anschalteeinheiten ASE und einem Vermittler ATMS ist eine Übertragungskapazität von 256 x 64 kBit/s zuzüglich die Headerinformationen (Informationen des Kopfes einer ATM-Zelle) erforderlich, was einer Kapazität von mindestens 18476 kBit/s entspricht. Da gebräuchliche ATM-Vermittler Anschlussports für 155 Mbit/s aufweisen, empfiehlt sich für die Pfade VP der Einsatz von Lichtwellenleitern.

Die in Fig. 5 dargestellte Vernetzung zeigt den Fall, wo die vier Servermodule SLMY1 bis SLMY4 einer Systemgruppe ein und derselben Vermittlungseinheit VT an einem einzigen Standort zugeordnet sind. In diesem Fall ist ein Paketvermittlungsnetz PSN nicht unbedingt erforderlich und die notwendigen Verbindungen können direkt über den Vermittler ATMS geschaltet werden. Wenn hingegen miteinander kommunizierende Servermodule SLMY einer Systemgruppe weiter voneinander entfernt sind, wird vorzugsweise als Übertragungsmedium ein zwischen zwei Vermittlern ATMS eingefügtes Paketvermittlungsnetz PSN eingesetzt, wie dies in Fig.4 dargestellt ist.

Der erfindungsgemässe Einsatz einer auf ATM basierenden Vermittlung und Übertragung der Kommunikation zwischen den Servermodulen SLMY hat keine Rückwirkungen auf die Funktion der Servermodule SLMY, der Konzentratorbaugruppen DDBC und der Endgeräte EG (Fig. 1). Die Leistungsmerkmale, die Dynamik und das Verhalten des Kommunikationssystems werden - abgesehen von Verzögerungen in den Anschalteeinheiten ASE und in den Vermittlern ATMS - nicht tangiert.

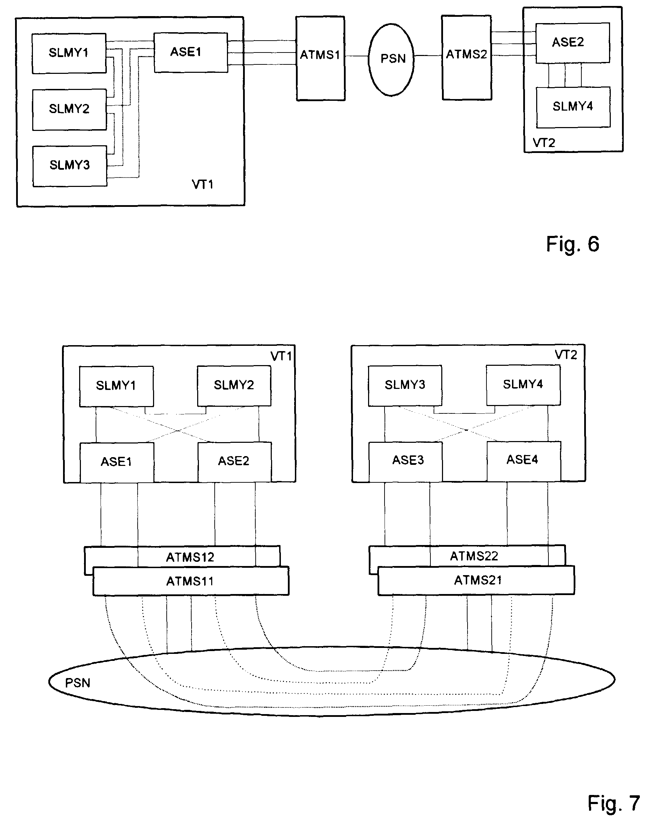

Aus Fig.4 wird auch deutlich, dass durch Verwendung eines Paketvermittlungs-Netzes PSN das Kommunikationssystem hinsichtlich des Standortes der Servermodule SLMY einer Systemgruppe sehr flexibel konfiguriert werden kann. Fig. 6 zeigt den Fall, wo drei Servermodule SLMY1, ..., SLMY3 einer ersten Vermittlungseinheit VT1 zugeordnet sind. Ein weiteres Servermodul SLMY4 ist "abgesetzt" und einer zweiten Vermittlungseinheit VT2 an einem entfernten Standort zugeordnet. Die drei Servermodule SLMY1, ..., SLMY3 können wie bekannt (Fig.2) direkt über Kabel miteinander und zusätzlich mit einer Anschalteeinheit ASE 1 verbunden werden, die mit einem Vermittler ATMS1 verbunden ist. Die Verbindung zum abgesetzten Servermodul SLMY4 erfolgt dann wie beschrieben über ein Paketvermittlungsnetz PSN, wobei das Servermodul SLMY4 über eine Anschalteeinheit ASE2 und einen Vermittler ATMS2 an das Paketvermittlungsnetz PSN angeschlossen ist.

Die Verwendung eines Paketvermittlungs-Netzes PSN bietet weitere Vorteile, wenn zur Erhöhung der Betriebssicherheit des Kommunikationssystems die Servermodule SLMY auf mehrere Vemittlungseinheiten VT an einem oder an mehreren voneinander entfernten Standorten verteilt werden. Fig. 7 zeigt eine mögliche Konfiguration des Kommunikationssystems mit erhöhter Betriebssicherheit. Hier sind die Servermodule SLMY1, SLMY2 einer ersten Vermittlungseinheit VT1 und die Servermodule SLMY3, SLMY4 einer zweiten Vermittlungseinheit VT2 zugeordnet, wobei die Vermittlungseinheiten VT1 und VT2 sich am gleichen oder an voneinander entfernten Standorten befinden können. Zur weiteren Erhöhung der Betriebssicherheit sind die Anschalteeinheiten ASE der beiden Vermittlungseinheiten VT1 und VT2 und die Vermittler ATMS dopelt vorhanden. Die gezeigten Verbindungen der einzelnen Komponenten untereinander machen deutlich, dass der Ausfall einer einzelnen Komponente des Systems nur sehr eingeschränkte Auswirkungen hat.

Fällt beispielsweise die Anschalteeinheit ASE1 der Vermittlungseinheit VT1 aus, so sind davon nur die über diese Anschalteeinheit ASE1 verlaufenden Verbindungen betroffen, nämlich die Verbindungen zwischen den Servermodulen SLMY1 und SLMY4 und die Verbindungen zwischen den Servermodulen SLMY2 und SLMY3. Bezüglich des Ausfalls der Verbindung zwischen den Servermodulen SLMY1 und SLMY4 bedeutet dies: Die Leitungen des Servermoduls SLMY1 können nach wie vor von den eigenen Endgeräten EG (Fig.1) und von den Endgeräten EG der Servermodule SLMY2 und SLMY3 benützt werden; nur die Endgeräte EG des Servermoduls SLMY4 können nicht mehr auf die Leitungen des Servermoduls SLMY 1 zugreifen. Die Endgeräte EG des Servermoduls SLMY1 können nach wie vor auf Leitungen der Servermodule SLMY1, SLMY2 und SLMY3 zugreifen; hingegen können die Endgeräte EG des Servermoduls SLMY1 nicht mehr auf Leitungen des Servermoduls SLMY4 zugreifen. Analoges gilt bei einem Ausfall der Verbindung zwischen den Servermodulen SLMY2 und SLMY3.

Der durch Verwendung eines Paketvermittlungsnetzes zur Vernetzung der Servermodule SLMY (Fig.1, Fig.2) erzielte Vorteil wird umso grösser, je grösser die Anzahl Servermodule SLMY in einer Systemgruppe ist. Wenn beispielsweise - infolge zunehmender Anzahl von einer Systemgruppe zugeordneten Benutzern oder Aufteilung einer Systemgruppe auf eine grössere Anzahl Standorte - die Anzahl Servermodule SLMY von vier auf sieben erhöht wird, steigt die für eine vollständige Vernetzung notwendige Anzahl Verbindungen von 6 auf 21, was bei einer Realisierung mit Verbindungskabeln einen nicht mehr vertretbaren Aufwand bedeutet.

Wenn die Benutzer einer Systemgruppe - wie dies bei Banken für den Wertschriften-oder Devisenhandel der Fall ist - weltweit auf verschiedene Standorte verteilt sind, können die zugeordneten Servermodule SLMY über Paketvermittlungsnetze miteinander vernetzt werden, die über das öffentliche Fernmeldenetz miteinander verbindbar sind. Wenn beim Betreiber bereits Paketvermittlungsnetze vorhanden sind, können sie zusätzlich für die erfindungsgemässe Anwendung genutzt werden.

## Patentansprüche

1. Kommunikationssystem mit mindestens einer Vermittlungseinheit (VT), die eine der Durchschaltung von Verbindungsleitungen dienende zentrale Durchschalteeinheit (SWU) mit einem Koppelfeld und einer zentralen Steuerung (ST) aufweist, sowie mit einerseits mit der Durchschalteeinheit (SWU) und andererseits mit Endgeräten (EG) verbundenen Servermodulen (SLMY1, ... SLMY4), die für die Bereitstellung von besonderen Leistungsmerkmalen für die Benutzer der Endgeräte (EG) miteinander verbunden sind, **dadurch gekennzeichnet,** dass die Servermodule (SLMY1, ... SLMY4) an ein Paketvermittlungs-Netz (PSN) angeschlossen sind und über dieses Netz (PSN) die für die Bereitstellung der besonderen Leistungsmerkmale erforderlichen Informationen und Signale austauschen.

2. Kommunikationssystem nach Anspruch 1, **dadurch gekennzeichnet**. dass das Paket-Vermittlungs-Netz (PSN) ein nach dem ATM-Verfahren betriebenes Netz ist.

3. Kommunikationssystem nach Anspruch 1 oder 2, **dadurch gekennzeichnet,** dass die Servermodule (SLMY1, ..., SLMY4) in Systemgruppen zusammengefasst sind und die Servermodule einer Systemgruppe der gleichen Vermittlungseinheit (VT) zugeordnet sind.

4. Kommunikationssystem nach Anspruch 1 oder 2, **dadurch gekennzeichnet**, dass die Servermodule (SLMY1, ..., SLMY4) in Systemgruppen zusammengefasst sind und die Servermodule einer Systemgruppe mindestens zwei Vermittlungseinheiten (VT) am gleichen Standort zugeordnet sind.

5. Kommunikationssystem nach Anspruch 1 oder 2, **dadurch gekennzeichnet,** dass die Servermodule (SLMY1, ..., SLMY4) in Systemgruppen zusammengefasst sind und die Servermodule einer Systemgruppe mindestens zwei Vermittlungseinheiten (VT) an verschiedenen Standorten zugeordnet sind.

6. Kommunikationssystem nach einem der vorangehenden Ansprüche, **dadurch gekennzeichnet,** dass die Servermodule (SLMY1, ..., SLMY4) über Anschalteeinheiten (ASE) mit Vermittlern (ATMS) verbunden sind, die die erforderlichen Durchschaltungen vornehmen.
